# EUROPEAN PATENT APPLICATION

(11) **EP 1 378 856 A1**
(43) Date of publication of application: **07.01.2004**
(21) Application number: 02077470.9
(22) Date of filing: 01.07.2002
(51) Int. Cl.: G06K 11/18, G06F 3/00

(54) **Tactile feedback method and device**

(71) Applicant: Sony Ericsson Mobile Communications AB, 221 88 Lund (SE)
(72) Inventor: Klinghult, Gunnar, 221 83 Lund (SE)
(74) Representative: Akerman, Marten Lennart

(57) **Abstract**

The invention relates to a tactile feedback method and device, and more particularly a method and mechanism for providing a user with a physical touch sensation when moving a cursor through a menu on a display, typically in a portable device such as a mobile telephone. The invention also relates such a portable device incorporating a tactile feedback device. Thus, the invention provides a method in a device for providing a tactile sensation in connection with a pointing device (3, 4), the pointing device being used for inputting signals to a control device guiding a cursor on a display. A tactile sensation is generated when the cursor is moved to a defined position on the display The tactile sensation device comprises an actuator (6) adapted to be controlled by the control device and connected to a link mechanism (7) capable of impacting the pointing device (3, 4). The link mechanism may be adapted to hit the pointing device resulting in a click feel and/or to hit the pointing device repeatedly resulting in a vibration feel when defined events occur in the display.

## Description

### Field of the invention

The present invention relates to a tactile feedback method and device, and more particularly a method and mechanism for providing a user with a physical touch sensation when moving a cursor through a menu on a display, typically in a portable device such as a mobile telephone. The invention also relates to such a portable device incorporating a tactile feedback device.

### State of the art

US 6,271,834 discloses a graphic user interface pointing device for use in a keyboard for a computer system including a joystick actuator, which is attached between pre-selected keys of a keyboard unit. The actuator comprises a ferromagnetic slag that is driven to make a tactile feedback that may be sensed by the user of the control input device.

In the known device the tactile feedback is connected with the movement of the joystick itself, and not with events encountered on a display. Also problems would be encountered if this known device should be incorporated in portable device with a limited space and in combination with a pointing mechanism having a ball and magnetic rolls.

The present invention solves among other things the above-mentioned problems by providing a tactile sensation method and device. The device is adapted to be connected to a control device guiding a cursor on a display, such that the tactile sensation device will respond to the control device when defined events occur on the display. Also the tactile sensation device is adapted to impart click and/or vibration feels by impacting a pointing device.

### Summary of the invention

According to a first aspect, the invention provides a method of providing tactile feedback in a portable device comprising a display for showing images including a movable cursor, and a pointing device, the pointing device being used for inputting signals to a control device guiding the cursor on the display (2). In the method, a tactile sensation is generated when the cursor is moved to a defined position on the display.

Preferably a click feel is generated.

Different click feels may be generated when the cursor is moved to different defined positions on the display, including single clicks, dual clicks, and clicks with different amplitudes.

Also a vibration feel may be generated when the cursor is moved over a defined area on the display.

Different vibration feels may be generated when the cursor is moved over different defined areas on the display including slow and quick vibrations.

Suitably, a click sound is generated simultaneously with the click feel, and a buzzing sound is generated simultaneously with the vibration feel.

According to a second aspect, the invention provides a device for providing a tactile sensation in connection with a pointing device, the pointing device being used for inputting signals to a control device guiding a cursor on a display. The tactile sensation device comprises an actuator adapted to be controlled by the control device and connected to a link mechanism capable of impacting the pointing device.

Preferably, the link mechanism is spaced from the pointing device when not impacting it.

The link mechanism may be adapted to hit the pointing device resulting in a click feel and/or to hit the pointing device repeatedly resulting in a vibration feel.

Preferably, the link mechanism is capable of hitting the pointing device in different ways, resulting in different click feels including single clicks, dual clicks, and clicks with different amplitudes.

Also the link mechanism may be capable of creating a vibration in the pointing device in different ways, resulting in different vibration feels including slow and quick vibrations.

In one embodiment the link mechanism comprises a lever, one end of which is movable by the actuator and the other end of which is adapted to impact the pointing device.

The link mechanism may be provided with a substantially circular contact surface for contacting a ball of the pointing device.

Preferably, the circular contact surface is adapted to be located above magnetic rolls of the pointing device.

The link mechanism may be made of steel.

Suitably, the actuator comprises a linear motor, a piezoelectric device or a solenoid.

According to a third aspect, the invention provides a portable device comprising a display for showing images including a movable cursor, and a pointing device, the pointing device being used for inputting signals to a control device guiding the cursor on the display. The portable device comprises a device for providing a tactile sensation in connection with the pointing device, wherein the tactile sensation device comprises an actuator adapted to be controlled by the control device and connected to a link mechanism capable of impacting the pointing device.

Preferably, the link mechanism is spaced from the pointing device when not impacting it.

The link mechanism may be adapted to hit the pointing device resulting in a click feel.

Preferably, the link mechanism is capable of hitting the pointing device in different ways, resulting in different click feels including single clicks, dual clicks, and clicks with different amplitudes.

The portable device may further comprise a sound generator adapted to generate a click sound simultaneous with the click feel.

Preferably, the control device is adapted to command a click feel, and possibly a click sound, when the cursor is moved to a defined position on the display.

The link mechanism may be adapted to hit the pointing device repeatedly resulting in a vibration feel.

Also the link mechanism may be capable of creating a vibration in the pointing device in different ways, resulting in different vibration feels including slow and quick vibrations.

The sound generator may further be adapted to generate a buzzing sound simultaneous with the vibration feel.

Preferably, the control device is adapted to command a vibration feel, and possibly a buzzing sound, when the cursor is moved over a defined area on the display.

In one embodiment the link mechanism comprises a lever, one end of which is movable by the actuator and the other end of which is adapted to impact the pointing device.

The link mechanism may be provided with a substantially circular contact surface for contacting a ball of the pointing device.

Preferably, the circular contact surface is adapted to be located above magnetic rolls of the pointing device.

The link mechanism may be made of steel.

Suitably, the actuator comprises a linear motor, a piezoelectric device or a solenoid.

The portable device may be a mobile radio terminal, e.g. a mobile telephone, a pager, a communicator, an electric organiser or a smartphone.

### Brief description of the drawings

The invention will be described in detail below with reference to the accompanying drawings, in which:
fig. 1 is general view of a mobile telephone incorporating an embodiment of the invention,
fig. 2 is a side view, partially in cross section, of a tactile sensation device in connection with a track ball, and
fig. 3 is a top view of an embodiment of the link mechanism according to the invention.

### Detailed description of preferred embodiments

As mentioned in the introduction, the invention relates to a tactile sensation method and device in connection with a pointing device, especially in portable equipment such as mobile telephones.

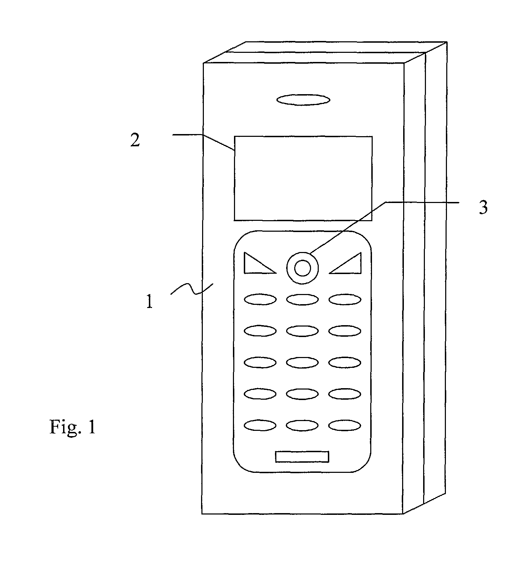

A typical mobile telephone is shown in fig. 1. The mobile telephone 1 is provided with a display 2 and pointing device 3 comprising a ball member, a so-called "track ball", used for navigating back and forth in menus shown on the display 2. The ball is turned by one finger. The pointing device supplies electric signals to a control device in the mobile telephone controlling events on the display, particularly movement of a cursor up and down, and left and right.

A problem with this type of input device like the track ball is the lack of tactile feedback for the user. The user gets no feedback to this finger from what his eyes can see when moving the cursor. This can make it difficult for the user to position the cursor while scrolling in the menu.

The idea according to one embodiment of the invention is to use an electrical driven actuator to create a mechanical impulse or vibration on the ball. This will give the finger of the user a feeling of a tactile feedback. The impulse should give the user a feeling of a click as the cursor is positioned on the screen.

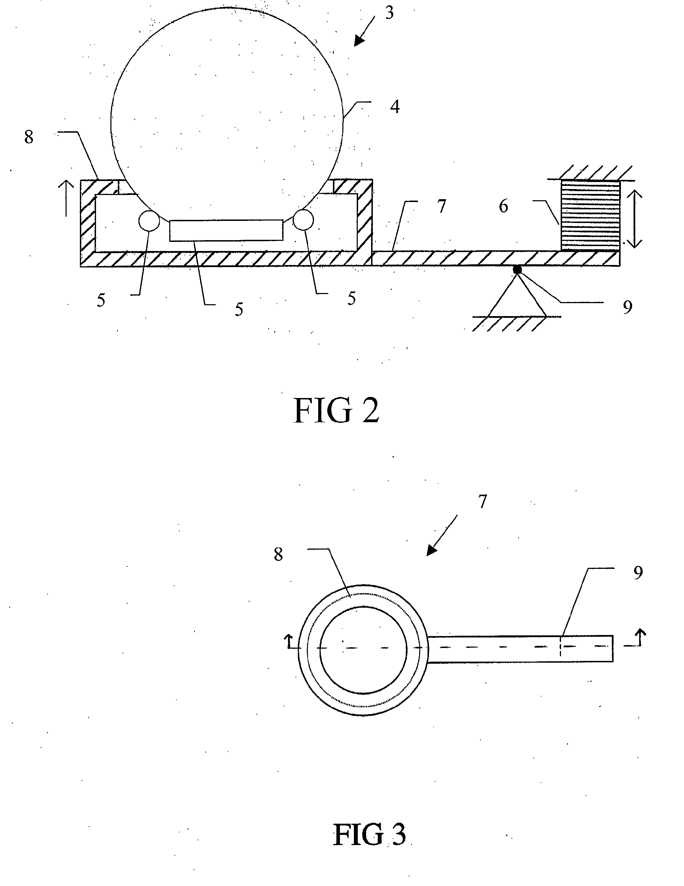

Fig. 2 shows a tactile sensation device in accordance with one embodiment of the invention in connection with a track ball mechanism. The ball 4 is lying on four rolls 5 made of a magnetic material. The rolls 5 are arranged at right angles to each other. Only three of the rolls 5 are visible in figure 2. As the ball 4 is moved the rolls 5 will also be turned. The movement of the rolls 5 is in turn sensed by a number of Hall element sensors, each placed in the vicinity of each roll e.g. on a circuit board located underneath the ball 4 (not shown). The Hall element sensors will give electric signals as output. For clarity not all the details of the suspension of the ball 4 are shown here, but may be of a conventional design. Also, other motion sensing means are possible.

The tactile sensation device comprises an actuator 6 and a frame 7 shown in cross section. As is shown in figs. 2 and 3, the frame 7 is at one end connected to the actuator 6. The other end is designed for contacting the ball 4. The frame works as a lever with a support point 9 between the actuator end and the ball end. The frame 7 is acting as a link mechanism transferring movement of the actuator 6 at one end to a reciprocating movement at the other end of the frame. As the actuator moves downward the frame 7 will move upward impacting the ball 4, thus producing an impulse wave travelling through the ball. Preferably, the frame is only in physical contact with the ball 4 when the actuator 6 is working, so that no frictional drag is experienced by the user when moving the ball. Preferably, the frame has a circular contact surface 8 for striking the ball 4. The magnetic rolls 5 are accommodated inside the frame 7.

The frame should be made of a material having a larger weight, such as steel, in order to impact the ball forcibly and transforming the impulse from the link mechanism to the ball and through the ball to the user's finger. Even if the frame is made of steel it will not interfere with the function of the magnetic rolls 5, since the amplitude of the motion of the frame is very small and has a very short duration.

Different types of actuators are possible. The actuator suitably includes a linear motor capable of providing a force moving a member back and forth. One type consists of a piezoelectric material. This gives a length change when an electrical field is applied over its poles. This can be used to achieve a force or a movement. The actuator can consist of one or several stacked plates of piezoelectric ceramic. Different types for this are possible, like the piston type or the bimorph type.

Another type of linear motor includes an electromagnetic solenoid.

The actuator 6 is electrically driven from an amplifier (not shown), controlled by the control means included in the mobile telephone. Since the feedback is electrically controlled, several different types of feedback are possible, for example, one or several clicks, e.g. single clicks, dual clicks, with different amplitudes as the cursor is moved into various positions in a menu. Suitably, a single click is commanded by the control device when the cursor is moved in position over an icon. By commanding the actuator 6 to move repeatedly up and down it is also possible to create a vibration feel in the ball. The vibration may be slow or quick depending on the situation. This may be exploited e.g. in games when the cursor is moved over a "forbidden" area.

It is possible to combine the click and vibration feel with sounds. In this case the conventional speaker system of the mobile telephone is controlled by the control device to generate click sounds in connection with the click feel and e.g. a buzzing sound in combination with the vibration feel.

The invention provides several advantages over the prior art. The user will get a tactile feedback, i.e. a physical movement, in his finger when moving the cursor on the display. This will make it much easier to move the cursor on the display, like scrolling in a menu, when the user can feel the click in his finger for each new step. The possibility of using several different types of feedback, like vibrations, is extra useful for games. The device is almost contact-free, which will give a minimum of mechanical wear and resistance.

Although one embodiment of the invention is described in detail, it should be appreciated by a person skilled in the art that many variations are possible. E.g. the specific design of the link mechanism may be varied without departing from the scope of the invention as defined in the claims. The invention may be applied in all kinds of devices having a menu with a pointing device and is especially useful in portable devices, like portable radio communication equipment, such as mobile radio terminals, mobile telephones, pagers, communicators, electronic organisers and smartphones.

## Claims

1. A method of providing tactile feedback in a portable device (1) comprising a display (2) for showing images including a movable cursor, and a pointing device (3, 4), the pointing device being used for inputting signals to a control device guiding the cursor on the display (2), **characterised in that** a tactile sensation is generated when the cursor is moved to a defined position on the display (2).

2. A method according to claim 1, **characterised in that** a click feel is generated.

3. A method according to claim 2, **characterised in that** different click feels are generated when the cursor is moved to different defined positions on the display (2).

4. A method according to claim 3, **characterised in that** said different click feels include single clicks, dual clicks, and clicks with different amplitudes.

5. A method according to any one of claims 1 to 4, **characterised in that** a vibration feel is generated when the cursor is moved over a defined area on the display (2).

6. A method according to claim 5, **characterised in that** different vibration feels are generated when the cursor is moved over different defined areas on the display (2).

7. A method according to claim 6, **characterised in that** said different vibration feels include slow and quick vibrations.

8. A method according to any one of claims 1 to 7, **characterised in that** a click sound is generated simultaneously with the click feel.

9. A method according to claim 8, **characterised in that** a buzzing sound is generated simultaneously with the vibration feel.

10. A device for providing a tactile sensation in connection with a pointing device (3, 4), the pointing device being used for inputting signals to a control device guiding a cursor on a display (2), **characterised in that** the tactile sensation device comprises an actuator (6) adapted to be controlled by the control device and connected to a link mechanism (7) capable of impacting the pointing device (3, 4).

11. A tactile sensation device according to claim 10, **characterised in that** the link mechanism (7) is spaced from the pointing device (3, 4) when not impacting it.

12. A tactile sensation device according to claim 10 or 11, **characterised in that** the link mechanism (7) is adapted to hit the pointing device (3, 4) resulting in a click feel.

13. A tactile sensation device according to claim 12, **characterised in that** the link mechanism (7) is capable of hitting the pointing device (3, 4) in different ways, resulting in different click feels including single clicks, dual clicks, and clicks with different amplitudes.

14. A tactile sensation device according to claim 10, 11, 12 or 13, **characterised in that** the link mechanism (7) is adapted to hit the pointing device (3, 4) repeatedly resulting in a vibration feel.

15. A tactile sensation device according to claim 14, **characterised in that** the link mechanism (7) is capable of creating a vibration in the pointing device (3, 4) in different ways, resulting in different vibration feels including slow and quick vibrations.

16. A tactile sensation device according to any one of claims 10 to 15, **characterised in that** the link mechanism (7) comprises a lever, one end of which is movable by the actuator (6) and the other end of which is adapted to impact the pointing device (3, 4).

17. A tactile sensation device according to any one of claims 10 to 16, **characterised in that** the link mechanism (7) is provided with a substantially circular contact surface (8) for contacting a ball (4) of the pointing device (3).

18. A tactile sensation device according to claim 17, **characterised in that** the circular contact surface (8) is adapted to be located above magnetic rolls (5) of the pointing device (3).

19. A tactile sensation device according to any one of claims 10 to 18, **characterised in that** the link mechanism (7) is made of steel.

20. A tactile sensation device according to any one of claims 10 to 19, **characterised in that** the actuator (6) comprises a linear motor, a piezoelectric device or a solenoid.

21. A portable device (1) comprising a display (2) for showing images including a movable cursor, and a pointing device (3, 4), the pointing device being used for inputting signals to a control device guiding the cursor on the display (2), **characterised by** a device for providing a tactile sensation in connection with the pointing device (3, 4), wherein the tactile sensation device comprises an actuator (6) adapted to be controlled by the control device and connected to a link mechanism (7) capable of impacting the pointing device (3, 4).

22. A portable device according to claim 21, **characterised in that** the link mechanism (7) is spaced from the pointing device (3, 4) when not impacting it.

23. A portable device according to claim 21 or 22, **characterised in that** the link mechanism (7) is adapted to hit the pointing device (3, 4) resulting in a click feel.

24. A portable device according to claim 23, **characterised in that** the link mechanism (7) is capable of hitting the pointing device (3, 4) in different ways, resulting in different click feels including single clicks, dual clicks, and clicks with different amplitudes

25. A portable device according to claim 23 or 24, **characterised in that** the portable device (1) further comprises a sound generator adapted to generate a click sound simultaneous with the click feel.

26. A portable device according to any one of claims 23 to 25, **characterised in that** the control device is adapted to command a click feel, and possibly a click sound, when the cursor is moved to a defined position on the display (2).

27. A portable device according to any one of claims 21 to 26, **characterised in that** the link mechanism (7) is adapted to hit the pointing device (3, 4) repeatedly resulting in a vibration feel.

28. A portable device according to claim 27, **characterised in that** that the link mechanism (7) is capable of creating a vibration in the pointing device (3, 4) in different ways, resulting in different vibration feels including slow and quick vibrations.

29. A portable device according to claim 25 and 27 or 28, **characterised in that** the sound generator further is adapted to generate a buzzing sound simultaneous with the vibration feel.

30. A portable device according to claim 27, 28, 29 or 30, **characterised in that** the control device is adapted to command a vibration feel, and possibly a buzzing sound, when the cursor is moved over a defined area on the display (2).

31. A portable device according to any one of claims 21 to 30, **characterised in that** the link mechanism (7) comprises a lever, one end of which is movable by the actuator (6) and the other end (8) of which is adapted to impact the pointing device (3, 4).

32. A portable device according to any one of claims 21 to 31, **characterised in that** the link mechanism (7) is provided with a substantially circular contact surface (8) for contacting a ball (4) of the pointing device (3).

33. A portable device according to claim 32, **characterised in that** the circular contact surface (8) is adapted to be located above magnetic rolls (5) of the pointing device (3).

34. A portable device according to any one of claims 21 to 33, **characterised in that** the link mechanism (7) is made of steel.

35. A portable device according to any one of claims 21 to 34, **characterised in that** the actuator (6) comprises a linear motor, a piezoelectric device or a solenoid.

36. A portable device according to any one of claims 21 to 35, **characterised in that** the portable device (1) is a mobile radio terminal, e.g. a mobile telephone, a pager, a communicator, an electric organiser or a smartphone.
